# EUROPÄISCHE PATENTSCHRIFT

(11) **EP 4 035 523 B1**
(45) Veröffentlichungstag und Bekanntmachung des Hinweises auf die Patenterteilung: **27.08.2025**
(21) Anmeldenummer: 21203099.3
(22) Anmeldetag: 18.10.2021
(51) Int. Cl.: A01F 15/04, B30B 9/30

(54) **LANDWIRTSCHAFTLICHE QUADERBALLENPRESSE**
AGRICULTURAL SQUARE BALER
PRESSE AGRICOLE À BALLES CARRÉES

(30) Priorität: 02.02.2021 DE 102021102348
(43) Veröffentlichungstag der Anmeldung: 03.08.2022
(73) Patentinhaber: Usines CLAAS France S.A.S, 57140 St. Rémy / Woippy (FR)
(72) Erfinder: Altmayer, Marc, 57320 Alzing (FR)
(74) Vertreter: CLAAS Gruppe

(56) Entgegenhaltungen:
- US-A1- 2010 242 749
- US-A1- 2017 164 561
- US-A1- 2020 383 272
- US-B2- 10 058 037
- US-B2- 10 165 730
- US-B2- 8 069 780

## Beschreibung

Die vorliegende Anmeldung betrifft eine landwirtschaftliche Quaderballenpresse gemäß dem Oberbegriff von Anspruch 1.

Die Quaderballenpresse, die zur Verarbeitung von Erntegut zu quaderförmigen Ballen geeignet ist, umfasst eine Antriebseinrichtung sowie einen Presskolben. Die Antriebseinrichtung ist dazu geeignet, den Presskolben anzutreiben, sodass der Presskolben zyklisch in einem Presskanal der Quaderballenpresse hin und her bewegbar ist. Die Antriebseinrichtung kann insbesondere dazu geeignet sein, an eine Zapfwelle einer landwirtschaftlichen Arbeitsmaschine angeschlossen zu werden, von der eine Antriebsleistung übernommen und unter anderem zum Antrieb des Presskolbens verwendet wird (US 2010/242749).

Der Presskanal weist in seinem Boden eine Beschickungsöffnung auf, durch die hindurch der Presskanal mit zu verdichtendem Erntegut beschickbar ist. Mit anderen Worten ist der Presskolben mittels der Antriebseinrichtung derart zyklisch in dem Presskanal hin und her bewegbar, dass er das zu verdichtende Erntegut sukzessive zu einem - im Wesentlichen die Form eines solchen annehmenden - Quaders verdichtet.

Der Presskolben weist eine Mehrzahl von Messern auf, die an einer vorderen Stirnseite des Presskolbens an dessen unterem Ende nah des Bodens des Presskanals angeordnet sind, um in Zusammenwirkung mit mindestens einer an dem Boden des Presskanals angrenzend an die Beschickungsöffnung angeordneten Gegenschneide überstehende Ernteguthalme abzuschneiden. Mit anderen Worten wird der Presskolben mit seinen Messers derart zyklisch hin und her bewegt, dass sich seine Messer mit der Gegenschneide "überschneiden", sodass die Ernteguthalme abgeschnitten werden. Die Ernteguthalme, die abgeschnitten werden, sind insbesondere solche, die durch die Beschickungsöffnung in den Presskanal einragen, sich jedoch nicht vollständig in dem Presskanal befinden.

Um das Erntegut nach einer Kompression mittels des Presskolbens im Presskanal in Form zu halten, umfasst die Quaderballenpresse außerdem eine Bindeeinrichtung, mittels der ein Garn um das Erntegut in Form der quaderförmigen Ballen gelegt wird. Hierzu umfasst die Bindeeinrichtung eine Nadel, mittels welcher das Garn geführt und somit um den Ballen gelegt werden kann. Weiterhin weist die Quaderballenpresse eine Knoteinrichtung auf, mittels welcher das Garn verknotet wird. Auf diese Weise bleibt die Form des Quaders auch nach Verlassen der Quaderballenpresse bestehen.

Quaderballenpressen der vorstehend beschriebenen Art sind im Stand der Technik bereits bekannt. Hierzu wird beispielhaft auf die europäische Patentanmeldung EP 2 232 980 B1 hingewiesen. Die darin beschriebene Quaderballenpresse umfasst einen modular aufgebauten Presskolben, der einen Hauptstützrahmen umfasst. An dem Hauptstützrahmen sind ein rechtes und ein linkes Kolbenendsegment sowie zwischen den Kolbenendsegmenten mehrere identische einzelne Kolbensegmente angeordnet. Hierbei sind die einzelnen Kolbensegmente in einem Abstand zueinander angeordnet, derart, dass Nadeln der Bindeeinrichtung dazwischen passieren können, um ein Garn durchzuführen. Außerdem sind an dem Presskolben Messer angeordnet, mittels welcher die Ernteguthalme abgeschnitten werden können, insbesondere mittels eines sogenannten Hackschnitts.

In der Praxis hat sich gezeigt, dass die Messer eine hohe Abnutzung aufweisen. Dies zeigt sich sowohl an den Messern selbst als auch an der Gegenschneide des Presskanals. Darüber hinaus ist eine Schneidqualität schlecht, was sich beispielsweise in nur teilweise oder gar nicht abgeschnittenen Ernteguthalmen äußert. Aufgrund der schlechten Schneidqualität ist außerdem ein erhöhter Verschleiß der Quaderballenpresse zu beobachten. Da die Ernteguthalme nicht zuverlässig abgeschnitten werden, sammelt sich weiterhin Erntegut unter anderem dort an, wo die Nadel mit dem Faden zwischen den Kolbensegmenten passieren muss. Hierdurch kann es beispielsweise passieren, dass die Nadel in dem Erntegut stecken bleibt und die Bindeeinrichtung somit blockiert wird. Weiterhin kann es auch passieren, dass die Nadel vom Faden abreist und im Erntegut verbleibt.

Der vorliegenden Anmeldung liegt mithin die Aufgabe zugrunde, eine Quaderballenpresse bereitzustellen, bei der die vorstehend beschriebenen Nachteile vermieden sind.

Die zugrunde liegende Aufgabe wird erfindungsgemäß mittels einer Quaderballenpresse mit den Merkmalen des Anspruchs 1 gelöst. Vorteilhafte Ausgestaltungen ergeben sich aus den zugehörigen Unteransprüchen.

Die erfindungsgemäße landwirtschaftliche Quaderballenpresse ist dadurch gekennzeichnet, dass mindestens eines der Messer eine Schneidkante mit zumindest einem Kantenabschnitt aufweist, der schräg zu einer Querebene des Presskanals orientiert ist. Der Kantenabschnitt, der vorzugsweise die gesamte Schneidkante umfasst, kann hierbei gleichermaßen in sich gerade oder zumindest teilweise gekrümmt ausgebildet sein. Beispielsweise ist eine halbelliptische Form oder eine gezackte Form denkbar.

Die erfindungsgemäße Quaderballenpresse hat viele Vorteile und unterscheidet sich von dem Stand der Technik grundlegend. Während der Stand der Technik solche Messer zeigt, deren Schneidkante im Wesentlichen parallel zu der Querebene des Presskanals orientiert ist, ist zumindest ein Kantenabschnitt, vorzugsweise die gesamte Schneidkante, bei der erfindungsgemäßen Quaderballenpresse schräg zu der Querebene des Presskanals angeordnet. Hierdurch kommt das Messer während einer Hin- und Her-Bewegung des Presskolbens nicht vollständig und gleichzeitig mit den Ernteguthalmen beziehungsweise der Gegenschneide in Kontakt, sondern entsprechend der Schneidkante sukzessive. Mit anderen Worten ist durch die schräg zu der Querebene des Presskanals orientierte Schneidkante gewährleistet, dass die Schneidkante beziehungsweise das Messer nach und nach mit den Ernteguthalmen beziehungsweise der Gegenschneide in Kontakt kommt. Dies begünstigt einen sog. "ziehenden Schnitt", der ein sauberes Abtrennen von Ernteguthalmen erleichtert.

Da die Messer des Presskolbens auf die Gegenschneide zugeführt werden, überlagern beziehungsweise überschneiden die Messer des Presskolbens die Gegenschneide erst wenig und dann immer mehr. Dies ist dadurch zu erklären, dass die Schneidkante der Messers nicht - wie durch den Stand der Technik bekannt - parallel zu der Gegenschneide orientiert ist, wobei letztere sich vorzugsweise parallel zur Querebene des Presskanals erstreckt. Sofern die Schneidkanten und die Gegenschneide parallel zueinander orientiert sind, kommt es genau bei dem Zusammenwirken, also wenn die Messer und die Gegenschneide sich "überschneiden", zu einem plötzlichen Abschneiden der Ernteguthalme. Hierdurch sind punktuell wirkende Kräfte auf die Schneide sehr hoch.

Im Gegensatz dazu sind die wirkenden Kräfte bei der erfindungsgemäßen Quaderballenpresse besonders reduziert, da die Messer des Presskolbens entsprechend der Schneidkante nicht plötzlich und vollständig mit der Gegenschneide "überschneiden", sondern nach und nach. In der Praxis hat sich gezeigt, dass durch die erfindungsgemäße Ausgestaltung ein besonders niedriger Verschleiß der Messer bei einer besonders hohen Schnittqualität realisiert werden konnte.

In vorteilhafter Ausgestaltung der erfindungsgemäßen Quaderballenpresse ist selbige dadurch gekennzeichnet, dass mindestens eines der Messer, vorzugsweise sämtliche Messer, eine Schneidkante mit einer von einer Geraden abweichenden Form aufweisen, wobei vorzugsweise sämtliche Messer gleich ausgebildet sind. Es ist beispielsweise denkbar, dass die Schneidkante mindestens eines der Messer mindestens teilweise wie eine Sichel ausgebildet ist. Durch die von einer Geraden abweichenden Form ist es möglich, dass die Ernteguthalme gewissermaßen von der Schneidkante "ergriffen" werden. Mit anderen Worten gleiten die Ernteguthalme nicht wie bei der Geraden ab, sondern kommen in einen besonders vorteilhaften Eingriff mit der Schneidkannte. Wieder mit anderen Worten können die Ernteguthalme durch eine derart ausgestaltete Schneidkante gewissermaßen geführt beziehungsweise gelenkt werden. Hierdurch ergibt sich vorteilhafterweise ein besonders schneller und effizienter Betrieb.

Die erfindungsgemäße Quaderballenpresse weiter ausgestaltend weist mindestens eines der Messer, vorzugsweise sämtliche Messer, eine V-förmige oder eine sägezahnförmige Schneidkante auf. Durch diese Ausgestaltung ist das Messer derart bereitgestellt, dass es jeweils an seinen Seiten eine "Spitze" und in seiner Mitte eine Einbuchtung aufweist. Vorzugsweise ist das derartig ausgestaltete Messer derart ausgerichtet, dass die Spitzen der Gegenschneide zugewandt sind, ihr also näher sind, als die Einbuchtung. Hierdurch kommen während der Hin- und Her-Bewegung des Presskolbens und somit der Messer zuerst die Spitzen des Messers beziehungsweise der Messer in Eingriff beziehungsweise Zusammenwirkung mit der Gegenschneide. Die Ernteguthalme, welche von der Schneidekante geführt werden, sind somit also zwischen der Schneidkante und der Gegenschneide eingeklemmt. Da die Ernteguthalme vor einem Abschneiden eingeklemmt und somit verdichtet sind, lässt sich vorteilhafterweise ein besonders sauberer und effizienter Schnitt realisieren.

Außerdem können die Ernteguthalme durch die derartige Ausgestaltung besonders gut ergriffen werden. Während sich der Presskolben mit seinen Messer hin und her bewegt, kann es bei der V-förmigen oder sägezahnförmigen Schneidkante nicht zu einem Abgleiten beziehungsweise Abrutschen der Ernteguthalme von der Schneidkante kommen. Mit anderen Worten werden die Ernteguthalme von der derartig ausgestalteten Schneidkante ergriffen und "gezogen". Hierdurch ist es besonders unwahrscheinlich, dass es zu unerwünschten Ansammlungen von Erntegut innerhalb des Presskanals kommt, was zu einer Störung und einer Unterbrechung des Betriebs in der vorstehend beschriebenen Weise führen kann. Vorteilhafterweise ich demzufolge ein besonders fehlerarmer und sicherer Betrieb bereitgestellt.

Sofern eine jeweilige Schneidkante mit in V-Form ausgebildet ist, ist das "V" der Schneidkante vorzugsweise mit seinem oberen, breiten Ende in Bewegungsrichtung des Presskolbens ausgerichtet, die der Presskolben im Zuge seiner Bewegung von seiner maximal in dem Presskanal zurückgezogenen Ausholstellung in Richtung von seiner maximal ausgelenkten Pressstellung aufweist, wobei bei Vorliegen in der Pressstellung der Pressdruck des Presskolbens auf das Erntegut maximal ist. Die Ausgestaltung der Schneidkante in dieser Orientierung, die auch im Ausführungsbeispiel gezeigt ist, hat den Vorteil, dass die Schneidkante gewissermaßen kurz vor dem Schnitt der Ernteguthalme eine Sammelfunktion ausübt, wobei die Ernteguthalme von den seitlichen Enden des jeweiligen Messers in einem Mittelbereich des Messers zusammengeführt werden. Eine seitliche Verdrängung der Ernteguthalme weg von dem Messer und ein damit ggf. ausbleibendes Abschneiden der Ernteguthalme wird dadurch reduziert.

In einer besonders vorteilhaften Ausgestaltung schließen zwei Kantenabschnitte der V-förmigen Schneidkante gemeinsam einen Winkel zwischen 120° und 179°, vorzugsweise zwischen 135° und 175°, weiter vorzugsweise zwischen 150° und 170°, ein. In der Praxis hat sich gezeigt, dass hierdurch ein besonders verschleißarmer Betrieb realisiert werden kann.

In einer besonders vorteilhaften Ausgestaltung der Quaderballenpresse weist der Presskolben eine Mehrzahl von Kolbensegmenten auf, die in Breitenrichtung des Presskolbens nebeneinander angeordnet sind, wobei vorzugsweise eine Anzahl der Messer einer Anzahl der Kolbensegmente entspricht und jeweils ein Messer einem Kolbensegment zugeordnet ist. Ein derartiger Ausbau ist insbesondere für Wartungsarbeiten besonders vorteilhaft. Die Messer verschleißen und müssen somit ausgetauscht werden. In der Praxis hat sich gezeigt, dass die Schneidkanten häufig lediglich punktuell beschädigt sind, im Übrigen jedoch eigentlich noch scharf genug sind, um weiterhin eingesetzt werden zu können. Eine solche punktuelle Beschädigung, beispielsweise in Form einer Kerbe oder eines Ausbruchs in der Schneidkante, kann entstehen, wenn ein Fremdkörper, beispielsweise ein Stein, gegen die Schneidkante prallt. Diese Beschädigung macht einen Austausch des Messers notwendig, auch wenn das Messer überwiegend intakt ist. Dieser Austausch ist besonders nachteilig, wenn das Messer groß beziehungsweise lang ist und die Beschädigung der Schneidkante im Verhältnis sehr klein. Durch eine Mehrzahl von Messern ist die individuelle Größe beziehungsweise Länge der einzelnen Messer reduziert. Bei Beschädigung muss also nur das eine beschädigte Messer ausgetauscht werden, während andere Messer anderer Kolbensegmente in Betrieb bleiben können. Vorteilhafterweise ergibt sich demzufolge ein besonders kostengünstiger Betrieb.

Vorteilhafterweise sind die Messer im Zuge der zyklischen Bewegung des Presskolbens jeweils in einer U-förmigen Schiene geführt, wobei die U-förmigen Schienen an oder auf dem Boden des Presskanals angeordnet sind. Hierdurch haben die Messer einen besonders guten Seitenhalt, sodass sie in einer seitlichen Richtung besonders gering belastet werden. Mit anderen Worten ist die Krafteinwirkung in seitlicher Richtung auf die Messer besonders gering. Weiterhin wird durch die Schiene ein Eindringen der Fremdkörper in die Schiene behindert, sodass die Schneide vor den Fremdkörpern geschützt ist. Außerdem können sich in der Schiene Ernteguthalme ansammeln, sodass dieses gezielt abgeschnitten werden können. Hierdurch ergibt sich der Vorteil, dass ein besonders verschleißarmer und sicherer Betrieb gewährleistet ist.

Die Erfindung ist nachstehend anhand eines Ausführungsbeispiels, das in den Figuren dargestellt ist, näher erläutert. Es zeigt:
- Fig. 1:: eine schematische Seitenansicht einer Quaderballenpresse gemäß dem Stand der Technik;
- Fig. 2:: eine schematische Draufsicht eines Presskanals mit darin angeordnetem Presskolben gemäß dem Stand der Technik;
- Fig. 3:: eine perspektivische Seitenansicht des Presskolbens aus **Figur 2****;**
- Fig. 4:: eine Frontansicht des Presskolbens aus **Figur 2****;**
- Fig. 5:: eine perspektivische Detailansicht eines Presskolbens einer erfindungsgemäßen Quaderballenpresse;
- Fig. 6:: eine Frontansicht des Presskolben in einem Presskanal der erfindungsgemäßen Quaderballenpresse;
- Fig. 7:: eine Detailansicht eines Messers der erfindungsgemäßen Quaderballenpresse; und
- Fig. 8:: eine schematische Detailansicht des Messers.

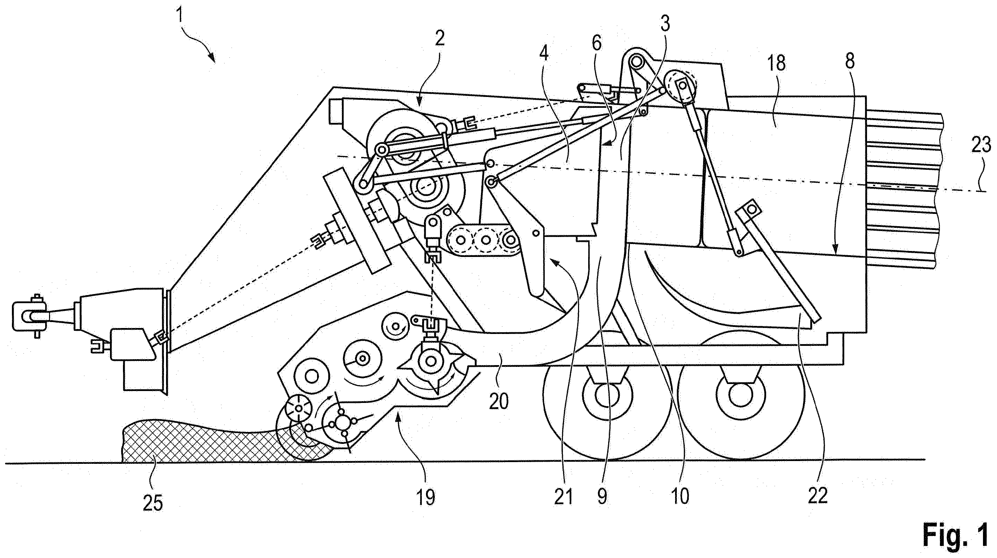

**Figur 1** zeigt eine Quaderballenpresse **1** gemäß dem Stand der Technik. Die Quaderballenpresse **1,** die zur Verarbeitung von Erntegut **25** zu quaderförmigen Erntegutballen **18** geeignet ist, umfasst eine Antriebseinrichtung **2.** Die Antriebseinrichtung **2** kann insbesondere dazu geeignet sein, an einen Antrieb einer landwirtschaftlichen Arbeitsmaschine angeschlossen zu werden, beispielsweise mittels einer Kupplung. Mit anderen Worten kann die Quaderballenpresse **1** von der Arbeitsmaschine angetrieben werden, welche aus Gründen der Übersichtlichkeit nicht dargestellt ist.

Die Quaderballenpresse **1** umfasst außerdem eine Pick-up **19,** mittels welcher das lose Erntegut **25** von einem Feld aufgenommen und sodann in einen Vorkanal **20** weitergeleitet werden kann. Dem Vorkanal **20** nachgeschaltet ist ein Raffer **21,** mittels welches das Erntegut **25** portionsweise in einen Presskanal **3** weitergeleitet werden kann. Hierbei weist der Presskanal **3** gemäß **Figur 1** eine Beschickungsöffnung **9** auf, durch welche hindurch das Erntegut **25** in den Presskanal **3** einleitbar ist. Innerhalb des Presskanals **3** wird ein Presskolben **4,** welcher zumindest mittelbar von den Antriebseinrichtung **2** angetrieben werden kann, zyklisch in Richtung einer Längsachse **23** hin und her bewegt, sodass das Erntegut **25** sukzessive zu einem Erntegutballen **18** verdichtet wird.

Der Presskolben **4** weist eine Stirnseite **6** auf, welche dem Erntegut **25** innerhalb des Presskanals **3** zugewandt ist. Mit anderen Worten wird der Presskolben **4** mit der Stirnseite **6** voran in Richtung des Ernteguts **25** bewegt, um dieses zu verdichten.

Um den Erntegutballen **18,** welcher im Wesentlichen die Form eines Quaders annimmt, wie **Figur 1** zeigt, zusammenzuhalten, kann der Erntegutballen **18** mit einem Garn umlegt werden. Dazu wird mittels einer ebenfalls in **Figur 1** gezeigten und einfach auch als Nadel bezeichneten Bindenadel **22** das Garn um den Erntegutballen **18** gelegt. Anschließend kann das Garn mittels einer Knoteinrichtung verknotet werden, die aus Gründen der Übersichtlichkeit nicht dargestellt ist. Der auch einfach als Ballen bezeichnete Erntegutballen **18** verlässt sodann in Richtung der Längsachse **23** die Quaderballenpresse **1** nach hinten und fällt auf das Feld hinab.

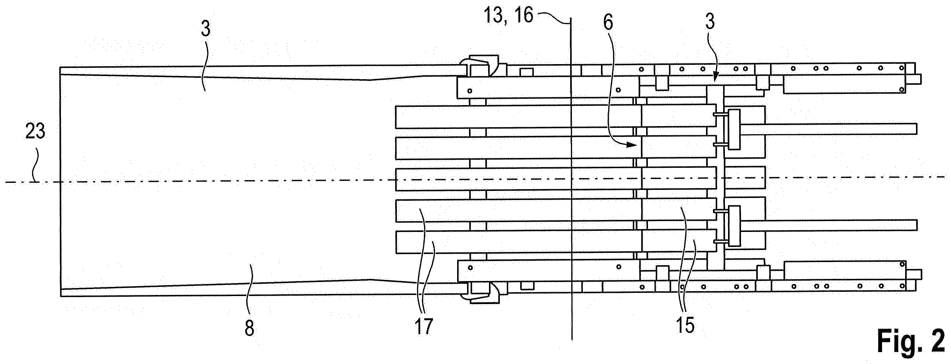

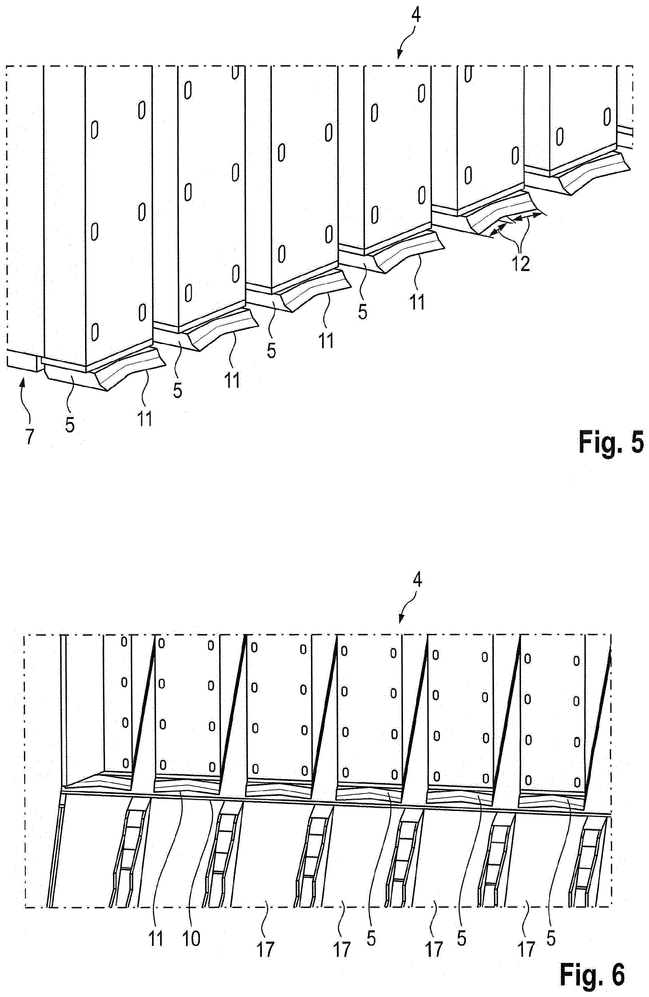

Der Presskolben **4** ist in mehrere Kolbensegmente **15** unterteilt, welche in einem Abstand zueinander in einer Breitenrichtung 16 angeordnet sind. Die derartige Ausgestaltung ist in den **Figuren 2 bis 6** dargestellt. Wie **Figur 2** beziehungsweise **Figur 6** zeigen, korrespondieren die einzelnen Kolbensegmente **15** jeweils mit einer Schiene **17,** welche an einem Boden **8** des Presskanals **3** angeordnet sind. Vorliegend sind die Schienen **17** parallel zueinander in Richtung der Längsachse **23** ausgerichtet, und zwar in einem Abstand zueinander, der dem Abstand der Kolbensegmente **15** entspricht. Mit anderen Worten sind die Kolbensegmente **15** unterseitig an ihrem unteren Ende **7** in den Schienen **17** geführt.

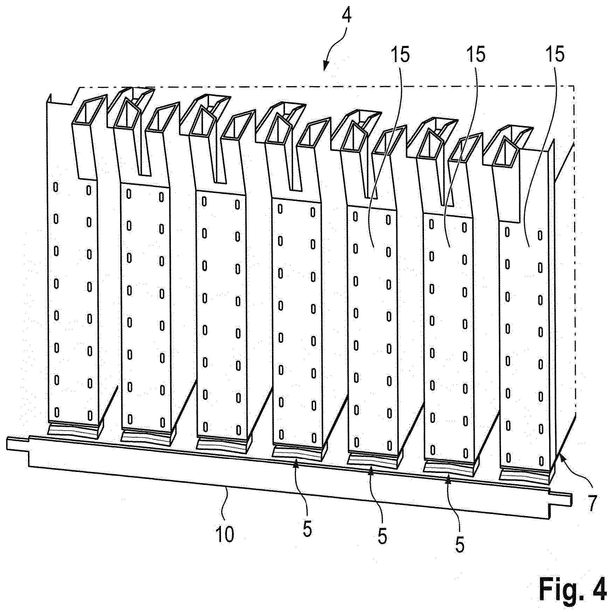

Um während eines Verdichtens des Ernteguts **25** Ernteguthalme, die von dem Vorkanal 20 durch die Beschickungsöffnung 9 hindurch teilweise in den Presskanal 3 einragen, abschneiden zu können, wirkt die Beschickungsöffnung **9** mit einer Gegenschneide **10** zusammen. Außerdem sind an der Stirnseite der Kolbensegmente **15** jeweils an dem unterseitigen Ende **7** Messer **5** angeordnet. Eine Ausgestaltung der Messer **5** gemäß dem Stand der Technik ist in **Figur 2****,** **Figur 3** und **Figur 4** dargestellt. In Zusammenwirkung der Messer **5** mit der Gegenschneide **10** können die überstehenden Ernteguthalme abgeschnitten werden. Mit anderen Worten kommen die Messer **5** im Zuge ihrer zyklischen Hin- und Her-Bewegung innerhalb des Presskanals **3** in die auch als Überlagerung oder Überschneidung bezeichnete Zusammenwirkung mit der Gegenschneide **10.** Dabei wirkt eine Schneidkante **11** eines jeweiligen Messers **5** derart mit einer Schneidkante der Gegenschneide **10** zusammen, dass beide gemeinsam einen Schneidspalt begrenzen. Diese Zusammenwirkung der Messer **5** mit der Gegenschneide **10** ist in **Figur 4** dargestellt und zeigt eine Ausgestaltung gemäß dem Stand der Technik.

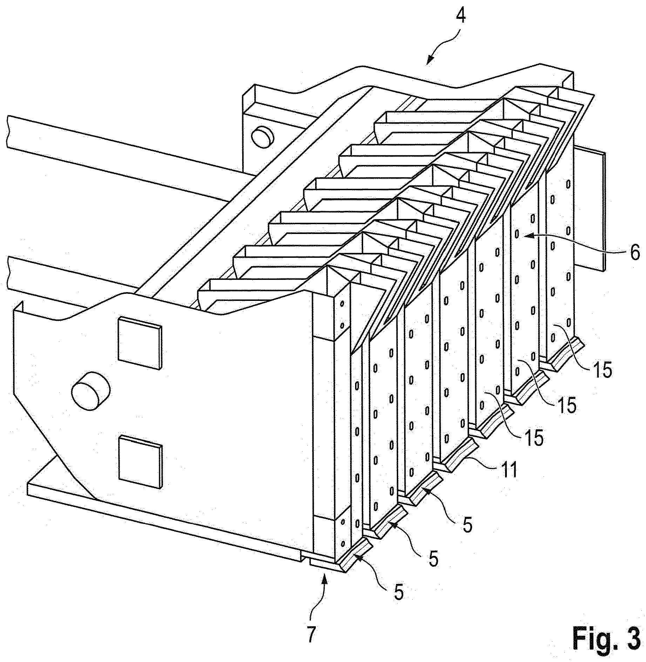

Die Messer **5** gemäß dem Stand der Technik weisen jeweils eine gerade Schneidkante **11** auf, wie in **Figur 3** beziehungsweise **Figur 4** besonders deutlich erkennbar gezeigt ist. Die Schneidkante 11 ist parallel zur der Gegenschneide **10** orientiert, wie **Figur 4** verdeutlicht.

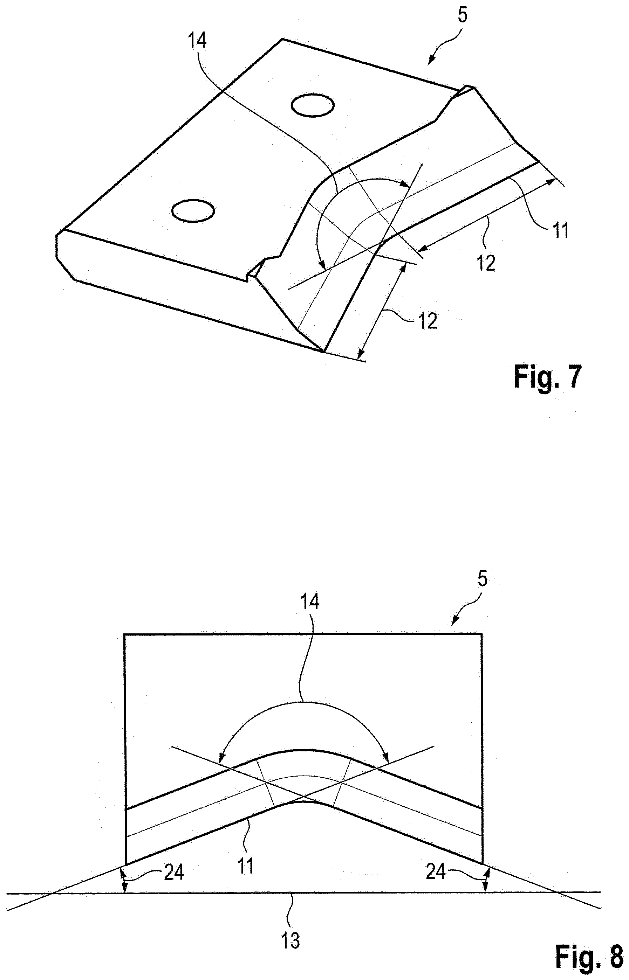

Die erfindungsgemäße Quaderballenpresse **1** unterscheidet sich von dem Stand der Technik durch die Messer **5.** Mit anderen Worten sind jegliche sonstigen vorstehenden Ausführungen übertragbar. Bei der erfindungsgemäßen Quaderballenpresse **1** sind die Messer **5** jeweils mit einer Schneidkante **11** ausgebildet, die zumindest einen Kantenabschnitt **12** umfassen, der schräg zu einer Querebene **13** orientiert ist. Wie **Figur 7** und **Figur 8** zeigen, ist das Messer **5** vorliegend mit zwei Kantenabschnitten **12** ausgebildet, die in einem Winkel **14** zueinander ausgerichtet sind. Der Winkel **14** beträgt hier ca. 165°. Die Schneidkante **11** weist entsprechend eine V-Form auf. Weiterhin zeigt **Figur 8****,** dass die Kantenabschnitte **12** jeweils in einem Winkel **24** zu der Querebene **13** orientiert sind. Die Winkel **24** betragen hier jeweils 7,5°.

**Figur 5** und **Figur 6** zeigen die Messer **5** der erfindungsgemäßen Quaderballenpresse **1** in vollständig hergestelltem Betriebszustand. Wie **Figur 6** zeigt, wirkt eine jeweilige Schneidkante **11** für sich genommen zu keinem Zeitpunkt als Ganzes vollständig mit der Gegenschneide **10** zusammen. Da die Schneidkante **11** vorliegend zwei Kantenabschnitte **12** aufweist, welche in einem Winkel **14** zueinander ausgerichtet sind, kommt das Messer **5** zuerst mit seinen einander gegenüberliegenden, äußeren zwei Spitzen in Kontakt mit der Gegenschneide **10.** Auf diese Weise ist eine Belastung auf das Messer **5** nicht so hoch wie bei einem Messer mit gerader Schneidkante **11** gemäß dem Stand der Technik.

### Bezugszeichenliste

- 1: Quaderballenpresse
- 2: Antriebseinrichtung
- 3: Presskanal
- 4: Presskolben
- 5: Messer
- 6: Stirnseite
- 7: Ende
- 8: Boden
- 9: Beschickungsöffnung
- 10: Gegenschneide
- 11: Schneidkante
- 12: Kantenabschnitt
- 13: Querebene
- 14: Winkel
- 15: Kolbensegment
- 16: Breitenrichtung
- 17: Schiene
- 18: Erntegutballen
- 19: Pick-up
- 20: Vorkanal
- 21: Raffer
- 22: Bindenadel
- 23: Längsachse
- 24: Winkel
- 25: Erntegut

## Patentansprüche

1. Landwirtschaftliche Quaderballenpresse (1) zur Verarbeitung von Erntegut zu quaderförmigen Erntegutballen, umfassend
- eine Antriebseinrichtung (2),
- einen Presskanal (3) sowie
- einen Presskolben (4),
wobei der Presskanal (3) in seinem Boden (8) eine Beschickungsöffnung (9) aufweist, durch die hindurch der Presskanal (3) mit zu verdichtendem Erntegut beschickbar ist,
wobei der Presskolben (4) mittels der Antriebseinrichtung (2) derart antreibbar ist, dass er zyklisch in dem Presskanal (3) hin und her bewegbar ist,
wobei der Presskolben (4) eine Mehrzahl von Messern (5) aufweist, die an einer vorderen Stirnseite (6) des Presskolbens (4) an dessen unterem Ende (7) nah des Bodens (8) des Presskanals (3) angeordnet sind, um in Zusammenwirkung mit mindestens einer an dem Boden (8) des Presskanals (3) angrenzend an die Beschickungsöffnung (9) angeordneten Gegenschneide (10) überstehende Ernteguthalme abzuschneiden,
**dadurch gekennzeichnet, dass**
mindestens eines der Messer (5) eine Schneidkante (11) mit zumindest einem Kantenabschnitt (12) aufweist, der schräg zu einer Querebene (13) des Presskanals (3) orientiert ist.

2. Landwirtschaftliche Quaderballenpresse (1) nach Anspruch 1, **dadurch gekennzeichnet, dass** mindestens eines der Messer (5), vorzugsweise sämtliche Messer (5), eine Schneidkante (11) mit einer von einer Geraden abweichenden Form aufweisen, wobei vorzugsweise sämtliche Messer (5) gleich ausgebildet sind.

3. Landwirtschaftliche Quaderballenpresse (1) nach Anspruch 1 oder 2, **dadurch gekennzeichnet, dass** mindestens eines der Messer (5), vorzugsweise sämtliche Messer (5), eine V-förmige oder eine sägezahnförmige Schneidkante (11) aufweist bzw. aufweisen.

4. Landwirtschaftliche Quaderballenpresse (1) nach Anspruch 3, **dadurch gekennzeichnet, dass** zwei Kantenabschnitte (12) der V-förmigen Schneidkante (11) gemeinsam einen Winkel (14) zwischen 120° und 179°, vorzugsweise zwischen 135° und 175°, weiter vorzugsweise zwischen 150° und 170°, einschließen.

5. Landwirtschaftliche Quaderballenpresse (1) nach einem der vorangehenden Ansprüche , **dadurch gekennzeichnet, dass** der Presskolben (4) eine Mehrzahl von Kolbensegmenten (15) aufweist, die in Breitenrichtung (16) des Presskolbens (4) nebeneinander angeordnet sind, wobei vorzugsweise eine Anzahl der Messer (5) einer Anzahl der Kolbensegmente (15) entspricht und jeweils ein Messer (5) einem Kolbensegment (15) zugeordnet ist.

6. Landwirtschaftliche Quaderballenpresse (1) nach Anspruch 5, **dadurch gekennzeichnet, dass** die Messer (5) im Zuge der zyklischen Bewegung des Presskolbens (4) jeweils in einer U-förmigen Schiene (17) geführt sind, wobei die U-förmigen Schienen (17) an oder auf dem Boden (8) des Presskanals (3) angeordnet sind.

## Claims

1. An agricultural square baler (1) for processing harvested material into square bales of harvested material, comprising
- a drive device (2),
- a baling channel (3), as well as
- a baler plunger (4),
wherein in its floor (8), the baling channel (3) has a feed opening (9) through which the baling channel (3) can be fed with harvested material to be compacted,
wherein the baler plunger (4) can be driven by means of the drive device (2) such that it can be moved backwards and forwards in the baling channel (3) in a cyclic manner,
wherein the baler plunger (4) has a plurality of knives (5) which are disposed at an end face (6) of the baler plunger (4) at its lower end (7) close to the floor (8) of the baling channel (3) in order to cut protruding stalks of harvested material in cooperation with at least one counter cutter (10) which is disposed at the floor (8) of the baling channel (3) adjoining the feed opening (9),
**characterized in that**
at least one of the knives (5) has a cutting edge (11) with at least one edge section (12) which is inclined with respect to a transverse plane (13) of the baling channel (3).

2. The agricultural square baler (1) according to claim 1,
**characterized in that** at least one of the knives (5), preferably all of the knives (5), have a cutting edge (11) with a shape which differs from a straight line, wherein preferably all of the knives (5) are configured in the same manner.

3. The agricultural square baler (1) according to claim 1 or claim 2, **characterized in that** at least one of the knives (5), preferably all of the knives (5), has or have a V-shaped or a sawtooth-shaped cutting edge (11).

4. The agricultural square baler (1) according to claim 3,
**characterized in that** two edge sections (12) of the V-shaped cutting edge (11) together enclose an angle (14) of between 120° and 179°, preferably between 135° and 175°, more preferably between 150° and 170°.

5. The agricultural square baler (1) according to one of the preceding claims, **characterized in that** the baler plunger (4) has a plurality of plunger segments (15) which are disposed next to one another in the width direction (16) of the baler plunger (4), wherein preferably the number of knives (5) corresponds to the number of plunger segments (15) and in each case, one knife (5) is associated with one plunger segment (15).

6. The agricultural square baler (1) according to claim 5,
**characterized in that** during the course of the cyclic movement of the baler plunger (4), the knives (5) are respectively guided in a U-shaped track (17), wherein the U-shaped tracks (17) are disposed at or on the floor (8) of the baling channel (3).

## Revendications

1. Presse agricole à balles carrées (1) destinée au traitement de produits récoltés pour obtenir des balles de récolte carrées, comprenant
- un dispositif d'entraînement (2),
- un canal de pressage (3), ainsi que
- un piston de pressage (4),
le canal de pressage (3) présentant dans son fond (8) une ouverture de chargement (9) à travers laquelle le canal de pressage (3) peut être chargé avec des produits récoltés à compacter,
le piston de pressage (4) pouvant être entraîné au moyen du dispositif d'entraînement (2) de manière à pouvoir être déplacé de façon cyclique, en un mouvement de va-et-vient, dans le canal de pressage (3),
le piston de pressage (4) présentant une pluralité de couteaux (5) qui sont disposés sur une face frontale (6) avant du piston de pressage (4), à l'extrémité inférieure (7) de celui-ci, à proximité du fond (8) du canal de pressage (3), aux fins de couper des tiges de récolte qui dépassent, en coopérant avec au moins un contre-couteau (10) disposé sur le fond (8) du canal de pressage (3), à proximité de l'ouverture de chargement (9),
**caractérisée en ce que**
au moins un des couteaux (5) présente une arête de coupe (11) dotée d'au moins une partie d'arête (12) qui est orientée en biais par rapport à un plan transversal (13) du canal de pressage (3).

2. Presse agricole à balles carrées (1) selon la revendication 1, **caractérisée en ce qu'**au moins un des couteaux (5), de préférence tous les couteaux (5), présentent une arête de coupe (11) ayant une forme qui diffère d'une droite, tous les couteaux (5) étant de préférence réalisés sous une forme identique.

3. Presse agricole à balles carrées (1) selon la revendication 1 ou 2, **caractérisée en ce qu'**au moins un des couteaux (5), de préférence tous les couteaux (5), présente(nt) une arête de coupe (11) en forme de V ou en forme de dents de scie.

4. Presse agricole à balles carrées (1) selon la revendication 3, **caractérisée en ce que** deux portions d'arête (12) de l'arête de coupe (11) en forme de V forment ensemble un angle (14) compris entre 120° et 179°, de préférence entre 135° et 175°, et de manière particulièrement avantageuse entre 150° et 170°.

5. Presse agricole à balles carrées (1) selon une des revendications précédentes, **caractérisée en ce que** le piston de pressage (4) présente une pluralité de segments de piston (15) qui sont disposés les uns à côté des autres dans le sens de la largeur (16) du piston de pressage (4), un nombre des couteaux (5) correspondant de préférence à un nombre des segments de piston (15), et un couteau (5) étant associé respectivement à un segment de piston (15).

6. Presse agricole à balles carrées (1) selon la revendication 5, **caractérisée en ce que** dans le cadre du mouvement cyclique du piston de pressage (4), les couteaux (5) sont guidés respectivement dans un rail (17) en forme de U, les rails en U (17) étant disposés à proximité ou sur le fond (8) du canal de pressage (3).
